# EUROPEAN PATENT SPECIFICATION

(11) **EP 3 074 633 B1**
(45) Date of publication and mention of the grant of the patent: **28.10.2020**
(21) Application number: 14864250.7
(22) Date of filing: 25.11.2014
(51) Int. Cl.: F04D 13/08, F17C 3/00, F04B 15/08

(54) **PUMP COLUMN BAFFLE FOR LNG PUMP**
PUMPSÄULENABLENKPLATTE FÜR FLÜSSIGERDGASPUMPE
CHICANE DE COLONNE DE POMPE POUR POMPE DE GAZ NATUREL LIQUEFIE

(30) Priority: 25.11.2013 US 201361908632 P; 25.11.2013 US 201361908659 P; 25.11.2013 US 201361908648 P; 25.11.2013 US 201361908594 P; 27.11.2013 US 201361909567 P; 27.11.2013 US 201361909884 P
(43) Date of publication of application: 05.10.2016
(73) Proprietor: Chart Inc., Ball Ground, GA 30107 (US)
(72) Inventor: JOHNSON, Terry, GA 30107 (US)
(74) Representative: Slingsby Partners LLP
(86) International application number: PCT/US2014/067445
(87) International publication number: WO 2015/077784

(56) References cited:
- EP-A1- 0 208 035
- JP-A- H07 119 894
- JP-A- S59 147 194
- US-A- 2 423 436
- US-A- 3 369 715
- US-A- 3 876 120
- US-A- 3 876 120
- US-A- 4 860 545
- US-A1- 2006 120 904

## Description

### REFERENCE TO PRIORITY DOCUMENT

This application claims priority to co-pending U.S. Provisional Patent Application Serial No. 61/908,632 entitled "Pump Column Baffle for LNG Pump" and filed on November 25, 2013. Priority to the aforementioned filing date is claimed.

The following co-pending U.S. Provisional Patent Applications are existing: (1) U.S. Provisional Patent Application Serial No. 61/908,659 entitled "Multimode Gas Delivery for Rail Tender" and filed on November 25, 2013; (2) U.S. Provisional Patent Application Serial No. 61/908,632 entitled "Pump Column Baffle for LNG Pump" and filed on November 25, 2013; (3) U.S. Provisional Patent Application Serial No. 61/908,648 entitled "SUMBERSIBLE PUMP BAFFLE FOR IN TANK PUMP" filed on November 25, 2013; (4) U.S. Provisional Patent Application Serial No. 61/908,594 entitled "SUMBERSIBLE PUMP BAFFLE FOR IN TANK PUMP" and filed on November 25, 2013; (5) U.S. Provisional Patent Application Serial No. 61/909,567 entitled "BOTTOM ACCESS IN TANK PUMP SUMP" and filed on November 27, 2013; and (6) U.S. Provisional Patent Application Serial No. 61/909,884 entitled "PUMP POSITIONING SCHEME FOR LNG RAIL TENDER" and filed on November 27, 2013.

### BACKGROUND

This disclosure relates to a pump column for positioning and accessing in-tank pumps such as for use in cryogenic fluid tanks and pumps.

A tender car (sometimes referred to as a "rail tender") is a special rail vehicle hauled by a rail locomotive. The tender car contains the locomotive's fuel. Some rail vehicles are fueled by liquid natural gas (LNG) such that the tender car is an LNG tender car, which typically includes a pump that is submersed within LNG in a tank. The pump is submersed in the LNG tank and is configured to pump the LNG to the rail locomotive.

There are currently rail LNG tenders with submersible in-tank pumps for delivery to rail engines. Rather than using a submersible pump in an external sump, in-tank pumps in rail tender application are often uses as the pump location with respect to the horizontal tank requires positioning above the bottom of the tank. This results in extra head loss associated with supplying LNG to an external sump, which is undesirable.

Furthermore, the pumps may be shutoff and turned on at various times. The in-tank pump enables immediate pumping capability as the pumps remain primed. External sumps are isolated during periods of non-use, which means the pump and external sump configuration must be re-primed every time the pump is reactivated. This is undesirable from a locomotive operational perspective.

The means of providing access to the pump and its associated electrical connections/sensors is done via a pump column. The pump column is secured inside the tank (both inner and outer tanks), and is accessed from outside the tank.
US 3876120 A discloses a pumping method and system having a single casing for filling and discharging a cryogenic storage reservoir.

### SUMMARY

Disclosed is a pump column that positions a submersible pump within an LNG cryogenic storage tank. In an embodiment, the tank functions as a tender. Current rail tenders with in-tank submersible pumps are often placed in the tank with the only access for service being a manway. In order to service the pump or access a sensor the tank must be completely emptied and then rewarming. This permits a service technician can enter the tank and repair the equipment. There is a need for a more serviceable solution to make a LNG rail tender commercially viable. Specifically, there is a need for a pump column that can provide pump access without emptying the tank.

The disclosed pump column Pump column provides easier and safer removal and access to a pump within a cryogenic vessel for maintenance or replacement. It has a manufacturable design that reduces or minimizes heat loss for the cryogenic storage vessel system. The column has a structurally robust design that gives consideration for high vibration mobile environments as well as differential movements of an inner tank containment shell and an outer vacuum jacket shell of the storage tank.

In one aspect, there is disclosed a device for accessing a pump inside a cryogenic fluid tank according to claim 1, and mainly comprising: an elongated, vertical column structure defining an internal volume, a bottom region of the vertical column structure being inside an inner tank, the inner tank being nested inside an outer tank such that a vacuum space exists between the inner and outer tanks, and an upper region of the vertical column structure extending out of the inner tank to the outer tank, wherein the upper region of the vertical column structure transitions to a bellows, the bellows being attached to the outer tank; the pump contained in a lower region of the column structure; at least one seal that provides a seal between the internal volume of the vertical column structure and a region within the inner tank exterior to the internal volume; a lift mechanism that can be actuated to raise the pump; and an actuator attached to the lift mechanism, the actuator adapted to raise the pump upon actuation.

The details of one or more variations of the subject matter described herein are set forth in the accompanying drawings and the description below. Other features and advantages of the subject matter described herein will be apparent from the description and drawings, and from the claims

### BRIEF DESCRIPTION OF THE DRAWINGS

Figure 1 shows a schematic representation of a tank that contains a fluid such as liquid natural gas and a fuel pump.
Figure 2 shows a side view of an exemplary embodiment of a pump column.

### DETAILED DESCRIPTION

Before the present subject matter is further described, it is to be understood that this subject matter described herein is not limited to particular embodiments described, as such may of course vary. It is also to be understood that the terminology used herein is for the purpose of describing a particular embodiment or embodiments only, and is not intended to be limiting. Unless defined otherwise, all technical terms used herein have the same meaning as commonly understood by one skilled in the art to which this subject matter belongs.

Disclosed is a pump column for use with a submersible pump in an LNG tank, such as for use in a rail tender. The pump column is configured to enable rapid removal and access to a pump submerged within an LNG tank containing LNG. The pump column provides a manufacturable design that minimizes heat loss for the tank and provides a structurally robust configuration. The pump column is configured to maintain the vacuum integrity of the LNG tank at all times.

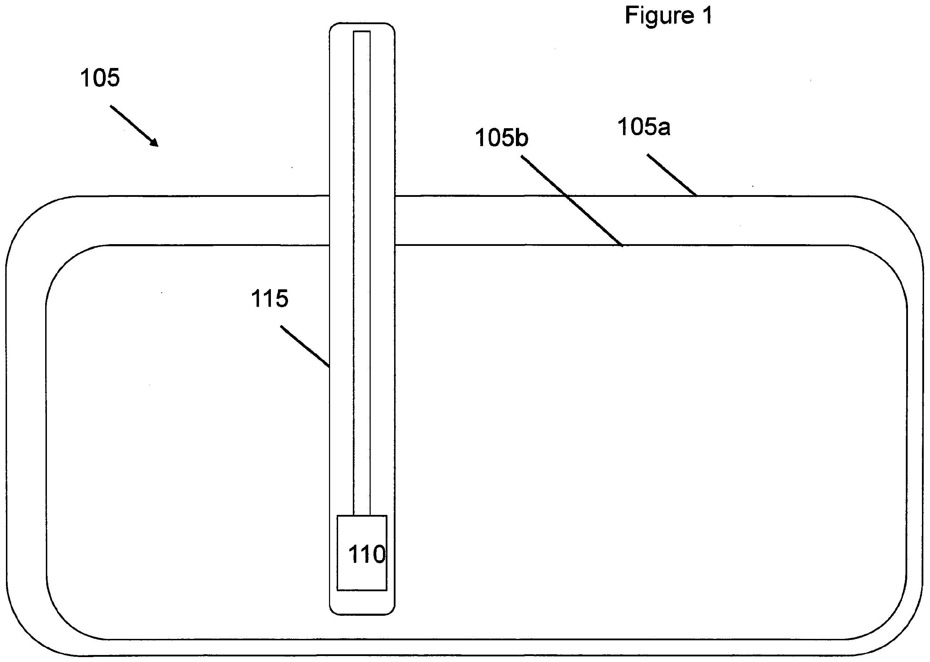

Figure 1 shows a schematic representation of a tank 105 that contains a fluid such as liquid natural gas (LNG). The tank 105 can be part of a rail tender hauled by a rail locomotive. The tender car contains the locomotive's fuel in the form of LNG although it should be appreciated that the pump column can be used in connection with other cryogenic fluids stored in tanks.

In an embodiment, the tank 105 is formed of an outer tank 105a in which is nested an inner tank 105b in a vacuum-sealed manner such that a vacuum space exists between the inner and outer tanks. A fluid pump 110 is positioned inside the inner tank 105b for pumping the LNG fuel to the locomotive such as via one or more fluid conduits that connect the tank 105 to the locomotive. A pump column 115 is positioned inside the tank 105 such that the pump column 115 extends from an upper region of the tank 105 downwardly to the pump 110. As mentioned, the pump column 115 is configured to enable rapid removal and access to the pump 110. The pump column may vary in structure and some exemplary embodiments are described herein.

The pump column includes a top works portion comprised of a high integrity seal that seals the internal portion of the pump from an exterior region. A malleable portion of the pump column, such as a bellows, provides for shape changing to compensate for movement such as a result of pressure differentials. Vacuum or gas monitoring of the top works can be used.

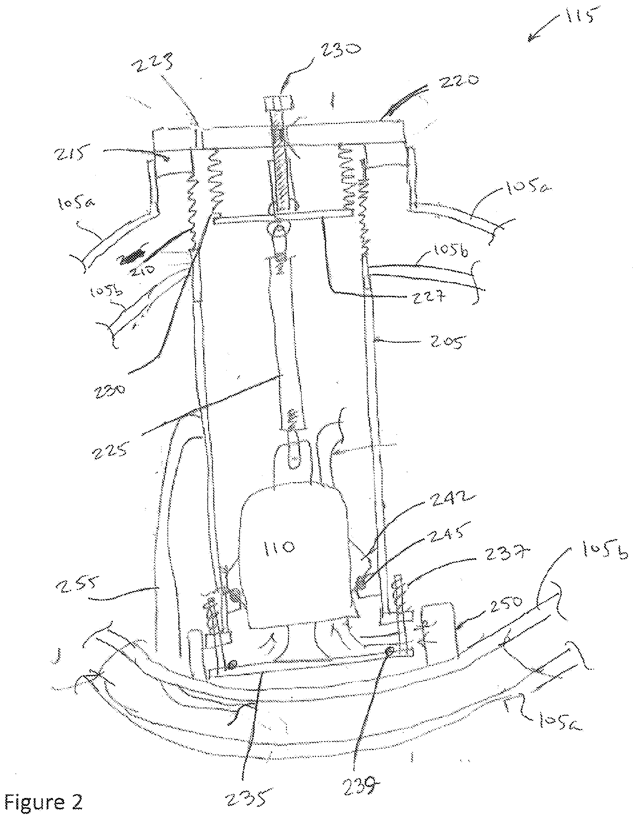

Figure 2 shows a side view of a first embodiment of the pump column 115. It should be appreciated that the embodiment of Figure 2 is an example and that variances in the structure and mechanical components of the pump column are within the scope of this disclosure.

The illustrated embodiment of the pump column 115 is attached to and contains the pump 110 and includes a pump column housing 205 that defines an elongated, vertical chamber in which the pump 110 is located at a bottom region. The pump column housing 205 may be a cylindrical housing that extends upward to the inner tank 105b and then transitions to an exterior bellows 210 that is attached to the outer tank 105a such as via a flange 215. The exterior bellows may be optional and may not be needed for small tanks. A pump column blind flange 220 is positioned at the top of the pump column 115 and encloses the interior chamber of the pump column 115. One or more openings or ports 223 may extend through the blind flange 220 to provide access to components within the pump column, as described below.

With reference still to Figure 2, the pump 110 is connected to the blind flange 220 via an interconnected series of components, including a jack rod 225 that is movably connected on one end to the pump 110 and on an opposite end to an isolation baffle plate 227. A lift mechanism, such as a jack screw 230, extends through the blind flange 220 via a threaded connection and also connects to the isolation baffle plate 227. An interior bellows 233 connects the blind flange 220 to an upper region of the isolation baffle plate 227.

In a bottom region of the pump column 115, the pump 110 rests atop a foot plate 235 that is movably connected to the pump column housing 205 via a foot alignment spring assembly 237. A foot seal 239 provides a sealing engagement with the foot plate 235. A foot boss 250 is positioned adjacent the column as described in more detail below. A portion of the pump 110 also rests on a pump seal latch 242 and a seal 245.

With reference still to Figure 2, the pump column housing 205 is a cylindrical body or structure component that houses the pump 110. The pump column housing 205 may be welded to the inner tank at an end of the pump column.

The foot plate 235 is a flat plate located at the base of the pump column. The foot plate 235 is sized and positioned to raise and/or lower the pump's vertical position upon actuation of the jack screw (or other actuation device) so that access to LNG is obtained. When the pump's vertical position is raised, the foot plate 235 also rises and seals off the base of the pump column. The foot alignment pins and spring assembly 237 is a spring assembly positioned on one or more alignment pins. The springs are biased so that they can exert a force on the foot plate 235 to raise the foot plate 235 as the pump is elevated.

The foot seal 239 is formed of an o-ring or equivalent compression type seal. As the foot pedal 235 is raised, the foot seal 239 is compressed and provides a seal mechanism such that the pump can be removed from the column. The housing distal boss provides a surface against which the foot seal 239 compresses for sealing off the base of the pump column.

In addition, the foot boss 250 is welded or otherwise attached to the inner tank 105b. It provides structural support to secure against lateral forces on the pump column. In an alternative embodiment, alignment pins and corresponding holes are included in the foot plate 235 and the housing distal boss. The foot boss 250 is sized to extend above the housing distal boss. The foot boss 250 does not need to be circumferential around the entire pump column. In an embodiment, the foot boss 250 provides a three point support to the pump column.

The pump column flange 215 is welded or otherwise attached onto the outer tank and the pump column blind flange 220 is mounted to pump column flange 215. The pump column blind flange 220 forms a top plate for the pump column. It provides a sealing surface for preventing LNG from escaping the pump column. It is bolted or otherwise sealingly attached to the pump column flange 215.

With reference still to Figure 2, the exterior bellows 210 is attached to an upper region of the pump column housing 205. The exterior bellows 210 may be, for example, a stainless steel convoluted bellows. The exterior bellows 210 provides multiple functions. The exterior bellows is welded or attached to the pump column flange 215 (which is welded to the outer tank) and both are welded or otherwise attached to the pump column housing 205 (which is welded to the inner tank). The thinner metal or material of the exterior bellows 210 inhibits heat conduction from the inner tank to the outer tank. The convoluted shaped bellows of the exterior bellows 210 is configured to retain a pressure differential between the inner and outer tanks (from positive pressure of the inner tank to vacuum in the annular space between inner and outer tank). The exterior bellows, which can change shape by expanding or retracting, serves as an expansion joint for thermal movements of the inner tank with respect to the outer tank. These movements are not necessarily on the vertical axis of the pump column so even lateral movements can be accommodated by the bellows.

The isolation baffle plate 227 is located below the pump column blind flange 220. The purpose of the Isolation baffle plate varies. For example, the isolation baffle plate 227 prevents LNG from exiting along the screw threads of the pump jack screw 230. In addition, the isolation baffle plate 227 serves a push plate from the pump jack screw to the jack rod 225 to the pump 110.

The interior bellows 233 is a convoluted bellows (such as stainless steel) attached to the isolation baffle plate 227 and to the pump column blind flange 220. The interior bellows 233 inhibits heat transfer of the cold LNG to the pump column blind flange 220 by reducing the contact area and by the thin metal conductive path. Furthermore, as the jack screw 230 is advance or retracted, the isolation plate 227 is correspondingly moved. The isolation bellows maintains pressurized sealing with jack screw adjustments.

The pump jack screw 230 is actuated such as by turning to raise or lower the pump within the pump column and accordingly to seal or open the flow path along the interior of the foot plate. The jack screw 230 is connected to the jack rod 225 via the baffle plate 227. The jack rod is connected to the pump and to the isolation plate via proximal and distal linkages. Alternative embodiments include hydraulic presses or jacks. The linkages permit some misalignment between the pump and the pump column blind flange.

The pump seat seal 245 isolates the discharge of the pump within the pump column housing from the pump supply pressure (LNG tank pressure). Since the discharge pressure is higher than the pump supply pressure, the pump is compressed against the pump seal. The pump seal latch 242 provides a detent that mechanically attaches the pump to the pump column. The latch can be overcome by forceful retraction of the pump.

The pump discharge pipe 260 serves as a discharge port for the pump. The pump column discharge pipe 255 connects the pump column housing (discharge pressure) with the exterior components of the tank, e.g heat exchangers, recirculation lines, etc. The system may also include ports for other components including, for example, a relief valve, vents, and electrical.

### Exemplary Methods for Removing and Inserting the Pump

Pursuant to an exemplary method for removing the pump, the following steps are described. The steps are performed by a person that has access to the tank 105. In a first step, the person verifies or purges the top works portion of the column to a non-flammable atmosphere for hot work. The person then opens the top works (such as the top flange 220, for access to the pump lift mechanism. The top works can be opened in a variety of manners. The person next actuates or otherwise operates the lift mechanism to raise the pump. In a non-limiting example, this can be accomplished by actuating the jack screw 230. The foot valve seal 239 is used to isolate the pump column. In order to improve the foot plate seal, a pressure differential is created by blowing down the pressure in the pump column.

As a safety measure, the user then purges the pump column. The person can also sample the space or region within the pump column to verify a non-hazardous atmosphere within the pump column. The sample can be done in any of a variety of well-known manners. In order to access the pump, the user unbolts a pump column head plate from the pump column flange. The user then lifts the head plate, the lift mechanism, and the pump from the column while continuously purging of the pump column space as required. The removal process is then complete.

Pursuant to an exemplary method for inserting the pump, the following steps are described. First, the user purges the pump column and samples the column space gas to verify a non-hazardous atmosphere as in the removal process. The user then installs the pump into the pump column by lowering the head plate, lift assembly, and pump into the pump column. The user then bolts or otherwise attaches the pump column head plate to the pump column flange. This seals the pump column space between the head plate and the foot valve.

Next, the user closes the sampling line, if present, and pressurizes the pump column. The pump column is desirably pressurized sufficiently to equalize differential pressure across the foot valve such that the lift assembly can be operated to open the foot valve and restore communication between the storage vessel and the inlet to the pump. The user then vents the pump column as required in order to assure the purity of the contents of the pump column. The secondary sealing systems are then restored for lift assembly and sensor penetrations of the head plate. Finally, the user insulates and seals the top works and pulls vacuum to restore system thermal performance. The installation is then complete.

Although embodiments of various methods and devices are described herein in detail with reference to certain versions, it should be appreciated that other versions, embodiments, methods of use, and combinations thereof are also possible.

## Claims

1. A device for accessing a pump (110) inside a cryogenic fluid tank (105), comprising:
an elongated, vertical column structure (115) defining an internal volume; a pump contained in a lower region of the column structure;
at least one seal (239) that provides a seal between an internal volume of the vertical column structure and a region exterior to the internal volume;
a lift mechanism (225) that actuates to raise the pump; and
an actuator (230) attached to the lift mechanism, the actuator adapted to raise the pump upon actuation; **characterised in that**
a bottom region of the vertical column structure is inside an inner tank (105b), the inner tank being nested inside an outer tank (105a) such that a vacuum space exists between the inner and outer tanks, and an upper region of the vertical column structure extends out of the inner tank to the outer tank, wherein the upper region of the vertical column structure transitions to a bellows (210), the bellows being attached to the outer tank.

2. A device as in claim 1, wherein the actuator is a jack screw (230).

3. A device as in claim 2, wherein the jack screw threadedly extends through a top plate (220) on the column.

4. A device as in any preceding claim, wherein the lift mechanism comprises a jack rod (225) that attaches the actuator to the pump.

5. A device as in any preceding claim, further comprising a foot plate (235) that supports the pump at the lower region of the column structure.

6. A device as in any preceding claim, further comprising a discharge conduit that fluidly couples an internal volume of the pump to an exterior region.

7. A device as in any preceding claim, wherein the bellows can change shape by expanding or retracting.

8. A device as in any preceding claim, wherein the column is cylindrical.

9. A tender comprising a device according to any preceding claim.

## Patentansprüche

1. Vorrichtung zum Zugreifen auf eine Pumpe (110) in einem Tank für kryogenes Fluid (105), aufweisend:
eine längliche, vertikale Säulenstruktur (115), die ein inneres Volumen definiert;
eine in einem unteren Bereich der Säulenstruktur enthaltene Pumpe;
mindestens eine Dichtung (239), die eine Dichtung zwischen einem inneren Volumen der vertikalen Säulenstruktur und einem Bereich außerhalb des inneren Volumen bereitstellt;
einen Hebemechanismus (225), der sich in Bewegung setzt, um die Pumpe anzuheben; und
eine Betätigungsvorrichtung (230), die am Hebemechanismus befestigt ist, wobei die Betätigungsvorrichtung ausgebildet ist, um die Pumpe bei Betätigung anzuheben, **dadurch gekennzeichnet, dass** sich ein unterer Bereich der vertikalen Säulenstruktur innerhalb eines inneren Tanks (105b) befindet, wobei der innere Tank innerhalb eines äußeren Tanks (105a) derart eingeschachtelt ist, dass ein Vakuumraum zwischen dem inneren und dem äußeren Tank vorhanden ist, und wobei sich ein oberer Bereich der vertikalen Säulenstruktur aus dem inneren Tank zum äußeren Tank erstreckt, wobei der obere Bereich der vertikalen Säulenstruktur in einen Balg (210) übergeht, wobei der Balg am äußeren Tank befestigt ist.

2. Vorrichtung nach Anspruch 1, wobei die Betätigungsvorrichtung eine Abdrückschraube (230) ist.

3. Vorrichtung nach Anspruch 2, wobei sich die Abdrückschraube gewindemäßig durch eine obere Platte (220) an der Säule erstreckt.

4. Vorrichtung nach einem vorhergehenden Anspruch, wobei der Hebemechanismus eine Klinkenstange (225) aufweist, welche die Betätigungsvorrichtung an der Pumpe befestigt.

5. Vorrichtung nach einem vorhergehenden Anspruch, ferner aufweisend eine Fußplatte (235), welche die Pumpe im unteren Bereich der Säulenstruktur trägt.

6. Vorrichtung nach einem vorhergehenden Anspruch, ferner aufweisend eine Ablassleitung, die ein inneres Volumen der Pumpe fluidmäßig mit einem äußeren Bereich koppelt.

7. Vorrichtung nach einem vorhergehenden Anspruch, wobei der Balg durch Aufweiten oder Zusammenziehen seine Form ändern kann.

8. Vorrichtung nach einem vorhergehenden Anspruch, wobei die Säule zylindrisch ist.

9. Tender, aufweisend eine Vorrichtung nach einem vorhergehenden Anspruch.

## Revendications

1. Dispositif pour l'accès à une pompe (110) à l'intérieur d'un réservoir de fluide cryogénique (105), comprenant :
une structure de colonne verticale, allongée (115) définissant un volume interne ;
une pompe contenue dans une région inférieure de la structure de colonne ;
au moins un joint (239) qui fournit un joint entre un volume interne de la structure verticale de colonne et une région externe au volume interne ;
un mécanisme de levage (225) qui est actionné pour élever la pompe ; et
un actionneur (230) fixé au mécanisme de levage, l'actionneur étant adapté pour élever la pompe lors de l'actionnement ; **caractérisé en ce qu'**une région inférieure de la structure de colonne verticale se trouve à l'intérieur d'un réservoir interne (105b), le réservoir interne étant emboîté à l'intérieur d'un réservoir externe (105a) de sorte qu'un espace vide existe entre les réservoirs interne et externe, et une région supérieure de la structure verticale de colonne s'étend hors du réservoir interne vers le réservoir externe, dans lequel la région supérieure de la structure verticale de colonne fait la transition vers un soufflet (210), le soufflet étant fixé au réservoir externe.

2. Dispositif selon la revendication 1, dans lequel l'actionneur est un vérin à vis (230).

3. Dispositif selon la revendication 2, dans lequel le vérin à vis s'étend par filetage à travers une plaque supérieure (220) sur la colonne.

4. Dispositif selon l'une quelconque des revendications précédentes, dans lequel le mécanisme de levage comprend une tige de vérin (225) qui fixe l'actionneur à la pompe.

5. Dispositif selon l'une quelconque des revendications précédentes, comprenant en outre une plaque d'assise (235) qui soutient la pompe dans la région inférieure de la structure de colonne.

6. Dispositif selon l'une quelconque des revendications précédentes, comprenant en outre un conduit d'évacuation qui couple de manière fluidique un volume interne de la pompe à une région externe.

7. Dispositif selon l'une quelconque des revendications précédentes, dans lequel le soufflet peut changer de forme en se dilatant ou en se rétractant.

8. Dispositif selon l'une quelconque des revendications précédentes, dans lequel la colonne est cylindrique.

9. Un tender comprenant un dispositif selon l'un quelconque des revendications précédentes.
